# EUROPEAN PATENT SPECIFICATION

(11) **EP 0 637 169 B1**
(45) Date of publication and mention of the grant of the patent: **15.03.2000**
(21) Application number: 94305576.4
(22) Date of filing: 28.07.1994
(51) Int. Cl.: H04N 5/232, H04N 5/445, H04N 5/262

(54) **Character signal display for a camcorder**
Zeichensignalanzeige für einen Camcorder
Affichage d'un signal de caractère pour un caméscope

(30) Priority: 31.07.1993 KR 1481093; 19.07.1994 KR 1790594
(43) Date of publication of application: 01.02.1995
(73) Proprietor: Samsung Electronics Co., Ltd., Suwon-city, Kyungki-do 441-370 (KR)
(72) Inventor: Choi,Sung-gyu, 416, Maetan-dong, Paldal-gu, Kyungki-do (KR)
(74) Representative: Neill, Alastair William

(56) References cited:
- EP-A- 0 500 100
- EP-A- 0 547 899

## Description

The present invention relates to a character signal display for a camcorder.

In general, a user can confirm the operational status of the equipment currently being used by displaying characters onto such display devices as a monitor or an electronic view finder, or select a function using the displayed characters. A function that displays characters onto a screen of a display device is called an "on screen display" (OSD). The OSD function is widely applied to such devices as a television or camera-recorder (camcorder) for displaying the image pictures.

A vertical and a horizontal synchronous signal are employed so as to display the character data for OSD onto an exact location of a screen. The vertical and horizontal locations of the character data are determined by the vertical and the horizontal synchronous signals.

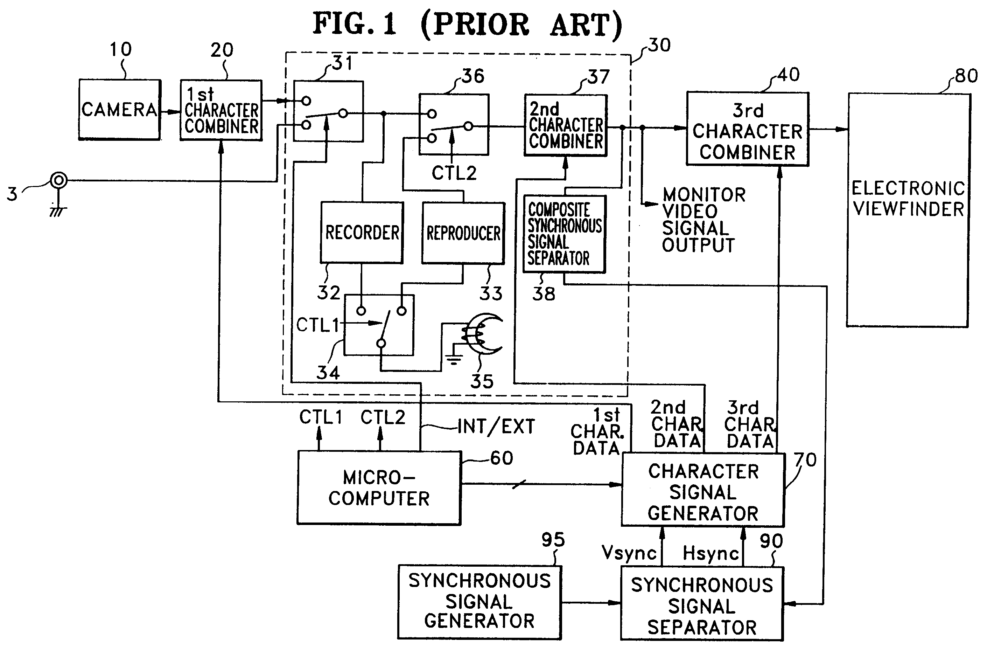

Figure 1 is a block diagram showing a conventional camcorder character signal display which performs the conventional OSD function.

Referring to Figure 1, a camera portion 10 is connected to a first character combiner portion 20 which also is connected to a first input terminal of a selector 31 of a recorder/reproducer 30. An external video signal input terminal 3 is connected to a second input terminal of selector 31. Recorder/reproducer 30 includes a selector 31, a recorder 32 connected to an output terminal of selector 31, a reproducer 33, a first control switch 34 whose first select contact is connected to an output terminal of recorder 32 and whose second select contact is connected to an input terminal of reproducer 33 and whose output terminal is connected to a head 35, a second control switch 36 whose first select contact is connected to an output terminal of selector 31 and whose second select contact is connected to an output terminal of reproducer 33, a second character combiner 37 connected to an output terminal of second control switch 36, and a composite synchronous signal separator 38 connected to an output terminal of second character combiner 37. A third character combiner 40 is connected between second character combiner 37 and an electronic view finder 80. A micro-computer 60 is connected to selector 31, select contacts of first and second control switches 34 and 36 and to a data input terminal of a character signal generator 70. First to third output terminals of character signal generator 70 are respectively connected to first to third character combiners 20, 37 and 40, and also are connected to an output terminal of vertical and horizontal synchronous signals of a synchronous signal separator 90. One input of synchronous signal separator 90 is connected to the output of composite synchronous signal separator 38, while another input is connected to an output terminal of a synchronous signal generator 95.

The camcorder can be roughly divided into a camera portion 10, a VCR portion and a view finder portion 80. Recorder/reproducer 30, third character combiner 40, micro-computer 60 and character signal generator 70 belong to the VCR portion.

Camera portion 10 converts an optical information into an electrical video signal which then is input to first character combiner 20.

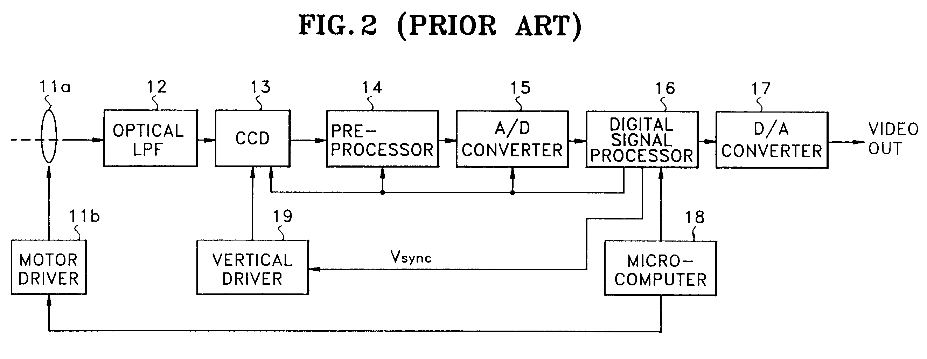

The detailed constitution of camera portion 10 is shown in Figure 2.

An object information input via a lens 11a is converted into an electrical video signal in a charge coupled device (CCD) 13 through an optical low-pass filter (LPF) 12 for preventing interference among the pixels of CCD 13. In a preprocessor 14, an output of CCD 13 is correlated- double-sampled (CDS) and automatically gain controlled (AGC). In addition, a gamma correction is performed so as to correct a video signal colour with respect to the automatically gain controlled output in preprocessor 14.

In an analogue to digital (A/D) converter 15, an output of preprocessor 14 is converted into a digital signal. In a synchronous signal generator provided to digital signal processor (DSP) 16, a synchronous signal is generated, and the video signal output from A/D converter 15 is divided into a luminance signal and a chrominance signal. Thereafter, the processed video signal and the generated synchronous signal are combined and shaped into a composite video signal so as to be output via a digital to analogue (D/A) converter 17. In addition, DSP 16 has a timing generator so that timings of CCD 13, preprocessor 14 and A/D converter 15 can be controlled and so that a vertical driver 19 for driving CCD 13 can be properly controlled by the generated synchronous signal (Vsync).

Accordingly, the output of camera 10 shown in Figure 1 is a composite video signal in which an image signal and synchronous signals are combined. In first character combiner 20, the composite video signal and the first character data signal output from character signal generator 70 are combined.

The first character data signal is used during recording, for example, the character data indicates recording conditions such as a date or a place. Thus, a user can recognise specific recording conditions by confirming the first character data.

An output signal of first character combiner 20 is input to a first input terminal of selector 31, while an external video signal is input to a second input terminal of selector 31 via external video signal input terminal 3. The external video signal source may for instance be a video cassette recorder, camcorder or television.

Meanwhile, in selector 31, either the input external video signal or a camera video signal is selected in accordance with an internal/external input select signal (Int/Ext) output from micro-computer 60. The selected signal is applied to recorder 32 or to a first select contact of second control switch 36.

In first control switch 34, an output signal of recorder 32 is recorded via head 35 or the signal reproduced by head 35 is provided to reproducer 33, in accordance with a record/reproduction mode control signal CTL1.

In second control switch 36, an output signal of selector 31 or an output signal of reproducer 33 is switched by reproduction/non-reproduction mode control signal CTL2 output from micro-computer 60. In second character combiner 37, the second character data generated from character signal generator 70 is combined with the video signal switched by second control switch 36, so as to be output to a monitor (not shown) and third character combiner 40, as well as to the composite synchronous signal separator 38 which in turn separates a composite synchronous signal loaded onto the composite video signal from second character combiner 37 for output to synchronous signal separator 90.

The second character data generated by character signal generator 70 is displayed onto a monitor, and is a data concerned with a channel number and volume level.

Meanwhile, in third character combiner 40, the video signal output from second character combiner 34 and the third character data generated from character generator 70 for OSD of electronic view finder 80 are combined. The third character data is for display onto electronic view finder 80 and is data recording camcorder operating conditions, such as charge state etc.

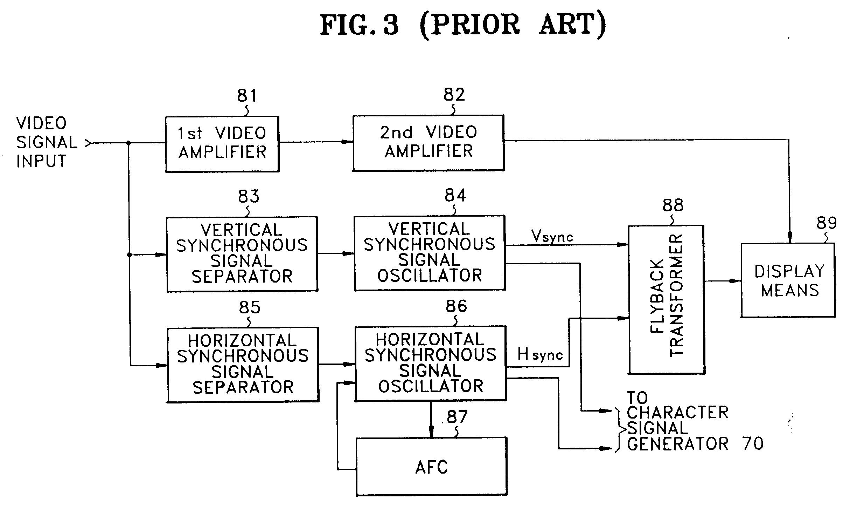

In electronic view finder 80, as shown in Figure 3, the video signal output from third character combiner 40 shown in Figure 1 is displayed onto display means 89, such as a CRT, through first and second amplifiers 81 and 82.

In vertical synchronous signal separator 83 and horizontal synchronous signal separator 85, the horizontal synchronous signal and vertical synchronous signal loaded onto a composite video signal output from third character combiner 40 are separated.

In vertical and horizontal synchronous signal oscillators 84 and 86, the respectively separate synchronous signals are input so as to generate the synchronous signals Vsync and Hsync having the correct frequencies. An automatic frequency controller (AFC) 87 is utilised in conjunction with horizontal synchronous signal oscillator 86 to provide a stable output.

In a flyback transformer 88, the vertical and horizontal deflections of display means 89 are controlled in accordance with the vertical synchronous signal (V_{sync}) and the horizontal synchronous signal (H_{sync}) output from vertical synchronous signal oscillator 84 and horizontal synchronous signal oscillator 86 so that an output of second video amplifier 82 can be displayed onto a correct location of a CRT.

Meanwhile, character signal generator 70 shown in Figure 1, generates first, second and third data for character combiner 20 which combines recording character data, for second character combiner 37 which combines OSD character data for monitor display, and for third character combiner 40 which combines OSD character data for electronic view finder 80, respectively, under the control of micro-computer 60. At this time, a synchronous signal is needed for displaying the character data onto a screen. Accordingly, the vertical and horizontal synchronous signals V_{sync} and H_{sync} are input to character signal generator 70, to thereby establish the location of the displayed character data.

Procedures for providing a synchronous signal to the conventional character signal generator 70 can be explained as follows, with respect to two types of video signal input conditions.
(1) if an external video signal or a camera video signal is input, the synchronous signal loaded onto a composite video signal output from second character combiner 37 is separated in synchronous signal separator 90 via composite signal separator 38. The horizontal and vertical synchronous signals are output to character signal generator 70.
(2) if an external video signal is not input, then the synchronous signal generated internally by synchronous signal generator 95 is input to synchronous signal separator 90. (Here, synchronous signal generator 95 is constituted by an oscillator for generating precise synchronous signals, which is typically a costly crystal oscillator). The input synchronous signal is divided into a vertical signal and a horizontal signal in synchronous signal separator 90, which then are output to character signal generator 70. When these horizontal and vertical synchronous signals are provided to character signal generator 70, the character signal is displayed onto a predetermined location of a monitor or electronic viewfinder 80, under the control of micro-computer 60 via the data output to character signal generator 70.

Since the conventional character display device described above is constituted by synchronous signal separator 90 and synchronous signal generator 95 for supplying character signal generator 70 with a synchronous signal when no external video signal is input, an additional cost is required.

In addition, when the synchronous signal of synchronous signal generator 95 is divided into vertical and horizontal synchronous signals and supplied to character signal generator 70, the supplied synchronous signals are erratic, which disturbs the character data display. Synchronous signal generator 95 generates a synchronous signal at regular intervals, however, the input video signal has an irregular horizontal and vertical synchronous signal, because when the video signal reproduced in an external VCR is input, the horizontal and vertical synchronous signals loaded onto the video signal may have been reproduced under such conditions as a poor video tape or irregular capstan motor operation. Accordingly, the video signal combined with the video signal and the character data cannot be displayed onto the correct location of a monitor or an electronic view finder, and as a result, the displayed characters are not sharp.

EP 0 500 100 discloses a video synthesising system in which synchronous signals are supplied from a camera portion of the system and from an external source.

To reduce or overcome the above-mentioned problems, it is an aim of preferred embodiments of the present invention to provide a character signal display for a camcorder which utilizes a synchronous signal supplied by a camera portion and view finder as a synchronous signal for displaying character data when no external video signal is supplied.

It is another aim to provide a character signal display for a camcorder which provides a synchronous signal for displaying the character signal using an external video signal when an external video signal is input, and which utilizes a synchronous signal separated by a view finder when no signal is input.

In accordance with an aspect of the invention, there is provided a character signal display for a camcorder which selects either an input camera video signal or an external video signal depending on a mode control signal and utilizes a synchronous signal already present and combined with the selected signal for character display, further comprising:
a camera portion for converting the optical information of the photographed object into an electrical video signal and forming a composite video signal by combining said video signal with a composite synchronous signal comprising respective horizontal and vertical synchronous signals generated by a synchronous signal generator of the camera portion; the character signal display characterised by comprising:
a view finder for, in a first case, displaying a character signal by generating respective horizontal and vertical synchronous signals and for supplying the synchronous signals to character signal generating means, the view finder in a second, alternate case, being for displaying a character signal by employing the vertical synchronous signal separated by a synchronous signal separator from the composite video signal output via said camera portion, and employing the horizontal synchronous signal separated by the view finder from the composite video signal and employing a horizontal synchronous signal generated by the view finder;
external input determining means for sensing whether an external video signal including a composite synchronous signal comprising respective horizontal and/or vertical synchronous signals is input from an external input terminal;
selection means for selecting said camera video signal from the camera portion or an external video signal from the external input terminal depending on a mode control signal, and for selecting said camera video signal if an external video signal is not input;
a micro computer for, in the second case, receiving the video signal selected by the selection means from a synchronous signal separator, which separates the vertical synchronous signal from the received composite synchronous signal, and in the first and second cases the microcomputer being for outputting a selection control signal for selecting said camera video signal or an external video signal depending on a mode control signal to said selection means;
character signal generating means for generating the character signal for supply to a predetermined location, based on the vertical and horizontal synchronous signals supplied from said micro-computer and/or said view-finder; and
character signal combining means for combining the character signal generated by said character signal generating means with said camera video signal or an external video signal.

In the above manner, the need for a separate and costly synchronous signal generator and separator is avoided.

Preferably, said view finder comprises an AFC circuit so that the horizontal synchronous signal separated from the signal loaded onto the video signal output via said camera portion can be corrected.

Preferably, said character signal combining means comprises:
first character combining meal's for combining record data generated by said character signal generating means and the camera video signal output from said camera portion;
second character combining means for combining external display data generated by said character signal generating means and the video signal selected by said selecting means; and
third character combining means for combining view finder display data generated by said character signal generating means and the video signal output via said second character combining means.

Preferably, said external input determining means comprises:
a comparator for comparing the direct current level of the external video signal input to said external input terminal and a reference signal level; and
switching means for outputting the switching signal as an input detection signal to said micro-computer according to the comparison result of said comparator.

For a better understanding of the invention, and to show how embodiments of the same may be carried into effect, reference will now be made, by way of example, to the accompanying diagrammatic drawings, in which:
Figure 1 is a block diagram showing a character signal display of the conventional camera-recorder;
Figure 2 is a detailed block diagram of the camera portion shown in Figure 1;
Figure 3 is a detailed block diagram of an electronic view finder shown in Figure 1;
Figure 4 is a block diagram showing an embodiment of a character signal display of a camera-recorder;
Figure 5 is a detailed circuit diagram showing the external input judging portion shown in Figure 4;
Figures 6A to 6C are waveform charts of the external input judging portion shown in Figure 5; and
Figure 7 is a block diagram showing another embodiment of a character signal display of a camera-recorder.

The present invention will be explained in more detail with reference to the attached drawings.

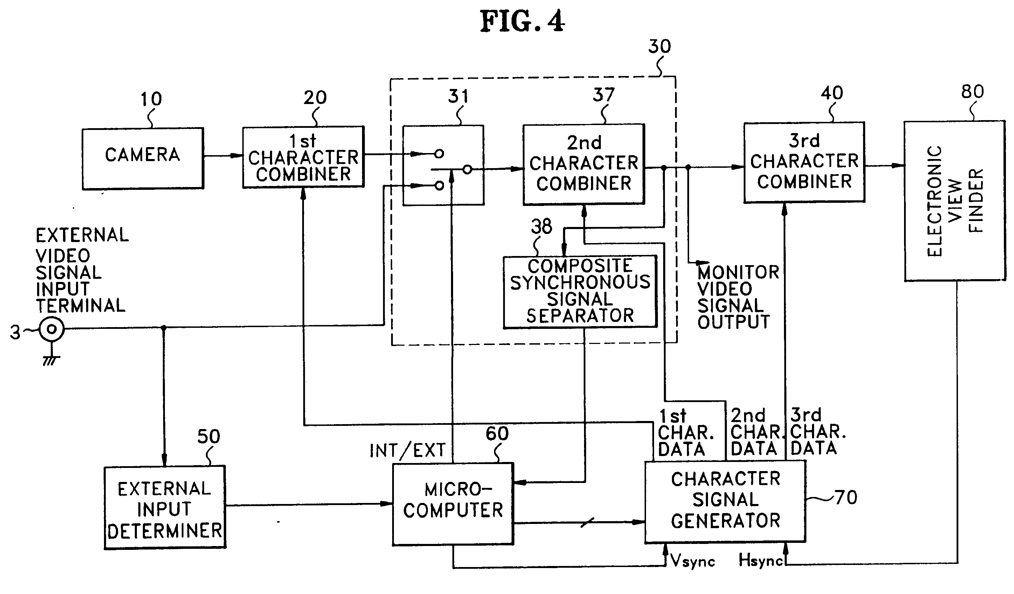

Figure 4 is a block diagram showing an embodiment of a character signal display of a camcorder in accordance with the invention.

Components which are the same as those in Figure 1 have the same reference numerals, and explanation thereof will be omitted.

Referring to Figure 4, in contrast with Figure 1, synchronous signal generator 90 and synchronous signal separator 95 for supplying the vertical and horizontal synchronous signals to the character signal generator 70 are removed. Then, the output terminal of composite synchronous signal separator 38 which belongs to recorder/reproducer 30 is connected to micro-computer 60, while the vertical synchronous signal output terminal of micro-computer 60 is connected to character signal generator 70. The horizontal synchronous signal output terminal of the horizontal synchronous signal oscillator 86 (Figure 3) of electronic view finder 80 is connected to character signal generator 70.

In addition, external input determiner 50 for sensing whether the external video signal is input is connected between external video signal input terminal 3 and micro-computer 60.

The procedure for supplying the horizontal and vertical synchronous signals to character signal generator 70 can be explained as follows.

Referring to Figure 4, the image introduced via the lens of camera portion 10 is output as an electrical video signal. Here, the video signal is a composite video signal wherein the video signal for image and the synchronous signal are combined. The synchronous signal is generated by a synchronous signal generator within camera portion 10.

In addition, as shown in Figure 3, electronic view finder 80 also includes oscillators 84 and 86 to supply the synchronous signal. Accordingly, the horizontal synchronous signal output from oscillator 86 is used so as to display the video signal correctly in electronic view finder 80.

That is, electronic view finder 80, internally produces the synchronous signal by a method in which the frequency of the synchronous signal is controlled automatically, by a comparison of the synchronous signal of an output video signal and the synchronous signal produced therein. Thus, the correct synchronous signal can be obtained.

As described above, an embodiment constituted to obtain the synchronous signal for displaying the character data by employing the synchronous signal generated by means of oscillators of the camera 10 and electronic view finder 80 is shown in Figure 4.

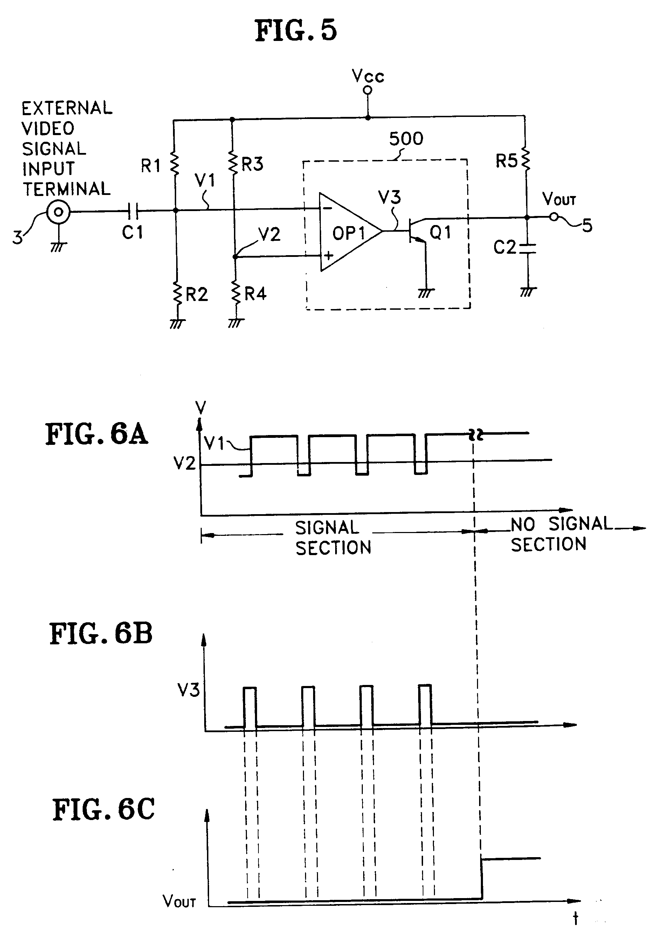

Now, the two conditions for video signal input will be described.
(a) if an external video signal input is detected, that is if the external video signal input from external video signal input terminal 3 is input to external input determiner 50 and to selector 31 of recorder/reproducer 30, a signal indicating the presence of an external input is input to micro-computer 60 from the external input determiner 50.
   The operation of external input determiner 50 to generate an external input detection signal will be explained with reference to Figure 5.
   When the external input detection signal for indicating the input of the external video signal is input from external input determiner 50 to micro-computer 60, an input selection signal for selecting an external video signal is output to selector 31 by micro-computer 60. Thus, when an external video signal is selected by selector 31, an operation of recorder/reproducer 30 explained with reference to Figure 1 is performed. In composite synchronous signal separator 38, a composite synchronous signal is separated from the composite video signal output from second character combiner 37, and the separated composite synchronous signal is input to micro-computer 60. Then, the vertical synchronous signal is separated from the input composite synchronous signal so as to be supplied to character signal generator 70.
   The vertical synchronous signal is separated via micro-computer 60 because micro-computer 60 is able to precisely correct the frequency of the vertical synchronous signal before output. In practice, the constitution of micro-computer 60 is complex for the case where the horizontal synchronous signal is separated after the composite synchronous signal is input to micro-computer 60. Further, the manufacturing cost of such device is quite expensive.
   In second character combiner 37, the second character data output from character signal generator 70 is combined with an external video signal, and the combined video signal is output to a monitor. The video signal input to the monitor and the third character data generated by character signal generator 70 are combined in third character combiner 40 so as to be output to electronic view finder 80. At this time, in electronic view finder 80, a horizontal synchronous signal is separated from the video signal output from third character combiner 40 so as to be input to character signal generator 70. Also, in electronic view finder 80, the synchronous signal loaded onto the video signal and the synchronous signal generated by the oscillator in electronic view finder 80 are compared so as to correct the phase and frequency precisely, thereby enabling the character data to be displayed in the correct location.
   In addition, even though there is a video signal, when the synchronous signal cannot be separated due to noise, the synchronous signal is generated by being based on the synchronous signal previously separated from the video signal by automatic frequency controller 87 shown in Figure 3. Thus, the synchronous signal having a phase and frequency suitable for displaying the character data is supplied to character signal generator 70.
   As described above, the vertical and horizontal synchronous signals separated from an external video signal are supplied to character signal generator 70 when there is an external input video signal present. (For the case of camera video input, selector 31 selects the output of first character combiner 20 so as to perform the same operation as above).
(b) With no external video signal applied via external video signal input terminal 3, a non-detection signal indicating that there is no external video signal input is output by external input determiner 50, which will be explained with reference to Figure 5. When the non-detection signal is input to micro-computer 60, the appropriate input selection signal is output to selector 31 by micro-computer 60. Then, micro-computer 60 controls selector 31 so that the camera video signal can be selected.
   As described above, the camera video signal is combined with the synchronous signal produced in camera portion 10. Moreover, within the camera video signal selected by selector 31, the character data for recording is combined to the camera video signal output from camera 10 by first character combiner 20, and the output of first character combiner 20 is input to composite synchronous signal separator 38 via second character combiner 37. The composite synchronous signal is separated from the composite video signal in composite synchronous signal separator 38 so as to be output to micro-computer 60, wherein the vertical synchronous signal is separated from the input composite synchronous signal so as to be supplied to character signal generator 70. This procedure is the same as that of example (a).
   In addition, an output of second character combiner 37 is output to a monitor and third character combiner 40, the output of which is input to electronic view finder 80. Then, the horizontal synchronous signal generated from horizontal synchronous oscillator 86 within the electronic view finder 80 is output to character signal generator 70, in a similar manner to the case in which an external video signal is input.

To summarize, when no external video signal is input, a camera video signal output from camera portion 10 is selected and input by selector 31. Then, the vertical synchronous signal is supplied to character signal generator 70 by employing the synchronous signal separated from the camera video signal, while the horizontal synchronous signal output from electronic view finder 80 is supplied to character signal generator 70.

Figure 5 is a detailed circuit diagram showing the external input determiner 50 shown in Figure 4 and constituted as follows.

A voltage comparator 500 is constituted by an operational amplifier OP1 and a transistor Q1 whose base is connected to an output terminal of amplifier OP1, and whose emitter is grounded, in an "open collector" configuration. Resistors R1 & R2 and R3 & R4 are serially connected to power voltage V_{cc} input terminal, with resistors R2 and R4 each being grounded. The common node between resistors R1 and R2 is connected to the inverting input of operational amplifier OP1, while the common node between resistors R3 and R4 is connected to the non inverted input of operational amplifier OP1. External video signal input terminal 3 is connected to one end of a capacitor C1 whose other end is connected to the common node of resistors R1 and R2. A resistor R5 and a capacitor C2 are connected in series, the common node of R5 and C2 forming an output terminal, the other terminal of R5 being connected to power voltage V_{cc} input terminal, and the other terminal of capacitor C2 being grounded. The collector of transistor Q1 is connected between to the common node of resistor R5 and capacitor C2, which forms output terminal 5 for the generation of an external input detection signal Vout.

Figures 6A to Figures 6C are waveform diagrams showing the operation of the external input determiner 50 shown in Figure 5.

Here, "V1" is an external video signal applied to the inverting input of operational amplifier OP1, and "V2" is a reference voltage of voltage comparator 500 applied at the non inverting input of operational amplifier OP1, "V3" is an output signal of voltage comparator 500, and "Vout" is an external input detection signal.

The operation of the thus-structured external signal determiner will be explained with reference to Figures 6A to Figures 6C.

An external video signal V1 is not applied to the inverting input of operational amplifier OP1 when there is no external input video signal (the "no signal section" shown in Figure 6A). Then, a video signal or a synchronous signal does not exist in the camcorder to thereby keep a pedestal level. Since the potential of the pedestal level is higher than the reference voltage V2 of voltage comparator 500, output signal V3 of operational amplifier OP1 is inverted so as to be output as a "low" signal (the "no signal section" shown in Figure 6B).

Accordingly, transistor Q1 having a low signal applied at its base is turned off, and the power voltage (Vcc) is output via resistor R5 and output terminal 5. As a result, external input detection signal Vout is turned "high" (the "no signal section" shown in Figure 6C).

However, when an external video signal is input (the "signal section" shown in Figure 6A), external video signal V1 is applied. Therefore, the section having a lower potential than reference voltage V2 of voltage comparator 500 exists in the synchronous signal section. Then, the input external video signal V1 is compared with reference voltage V2 of voltage comparator 500, and the synchronous signal section having a lower potential than reference voltage V2 is inversely amplified into a "high" state so as to output the output signal V3 (the "signal section" shown in Figure 6B). At this time, transistor Q1 is turned on during the "high" intervals of Figure 6B so that the power voltage Vcc is discharged by shunt to ground the resistor R5. In addition, during the "low" intervals in the "signal section" of Figure 6B is turned off so that power voltage Vcc charges capacitor C2. However, this charged voltage is thereafter discharged by shunt to ground due to the turn-on operation of transistor Q1 during the "high" intervals in the "signal section" of Figure 6B. Accordingly, capacitor C2 may not be charged to a level recognised as "high". A logic "low" external input detection signal Vout is output (the "signal section" of Figure 6C).

Thus, an external input detection signal is output according to the operation of external input determiner 50. Then, micro-computer 60 outputs an input selection control signal to selector 31 according to the external input detection signal, so as to select the camera video signal or external video signal.

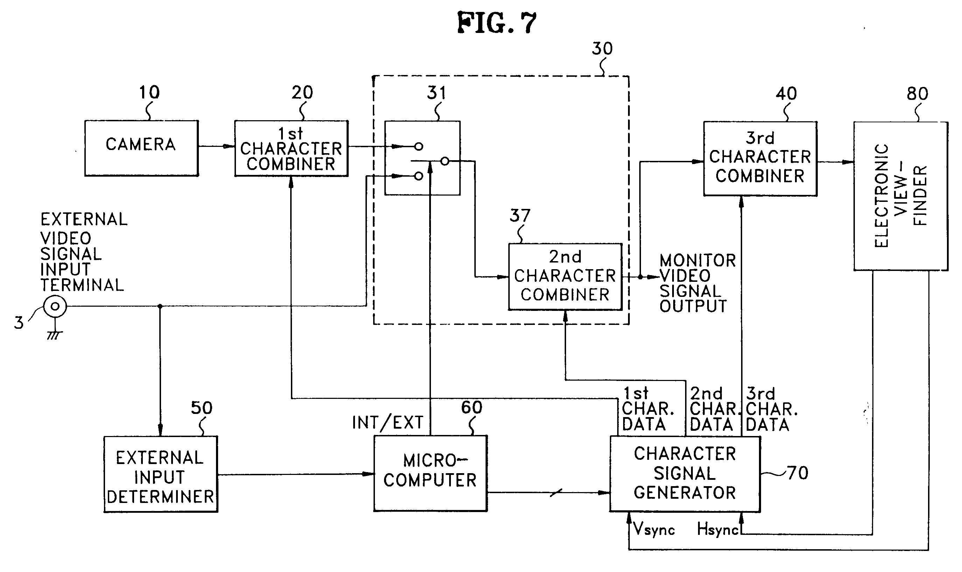

Figure 7 is a block diagram showing another embodiment of the character signal display for a camcorder.

Here, components which are the same as those in Figure 4, have the same reference numerals, and explanation thereof will be omitted.

Referring back to Figure 4, as for the vertical synchronous signal for generating the character when an external video signal is not input, the composite video signal generated by camera portion 10 is selected by selector 31, and the synchronous signal is separated from the selected camera video signal. Then, a vertical synchronous signal is separated from the synchronous signal by micro-computer 60 so as to output to character signal generator 70. In contrast, in the circuit of Figure 7, the horizontal and vertical synchronous signal input of character signal generator 70 are connected to the horizontal and vertical synchronous oscillator within electronic view finder 80. Thus, the character display location is controlled by employing the horizontal and vertical synchronous signals generated by electronic view finder 80.

The apparatus described may be adapted for use in any device incorporating a camcorder character display.

In the character signal display for a camcorder described, the horizontal and/or vertical synchronous signals generated from a camera portion and view finder are utilized without using an additional synchronous signal separator and synchronous signal generator. As a result, the manufacturing cost can be cut down, and the character data can be exactly displayed onto the monitor and the view finder.

## Claims

1. A character signal display for a camcorder which selects either an input camera video signal or an external video signal depending on a mode control signal and utilizes a synchronous signal already present and combined with the selected signal for character display, further comprising:
a camera portion (10) for converting the optical information of the photographed object into an electrical video signal and forming a composite video signal by combining said video signal with a composite synchronous signal comprising respective horizontal and vertical synchronous signals generated by a synchronous signal generator of the camera portion (10); the character signal display characterised in comprising:
a view finder (80) for, in a first case, displaying a character signal by generating respective horizontal and vertical synchronous signals and for supplying the synchronous signals to character signal generating means (70), the view finder (80) in a second, alternative, case being for displaying a character signal by employing the vertical synchronous signal separated by a synchronous signal separator (38) from the external video signal or the composite video signal output via said camera portion (10), and employing the horizontal synchronous signal separated by the view finder (80) from the composite video signal and employing a horizontal synchronous signal generated by the view finder (80);
external input determining means (50) for sensing whether an external video signal including a composite synchronous signal comprising respective horizontal and/or vertical synchronous signals is input from an external input terminal (3);
selection means (31) for selecting said camera video signal from the camera portion (10) or an external video signal from the external input terminal (3) depending on a mode control signal, and for selecting said camera video signal if an external video signal is not input;
a micro computer (60) for, in the second case, receiving the video signal selected by the selection means (31) from a synchronous signal separator (38), which separates the vertical synchronous signal from the received composite synchronous signal, and, in the first and second cases, the microcomputer (60) being for outputting a selection control signal for selecting said camera video signal or an external video signal depending on a mode control signal to said selection means (31);
character signal generating means (70) for generating the character signal for supply to a predetermined location, based on the vertical and horizontal synchronous signals supplied from said micro-computer (60) and/or said view-finder (80); and
character signal combining means (20, 37, 40) for combining the character signal generated by said character signal generating means (70) with said camera video signal or an external video signal.

2. A character signal display according to Claim 1, wherein said view finder (80) comprises an AFC circuit (87) so that the horizontal synchronous signal separated from the signal loaded onto the video signal output via said camera portion (10) can be corrected.

3. A character signal display according to any of Claims 1 or 2 wherein said character signal combining means (20, 37, 40) comprises:
first character combining means (20) for combining record data generated by said character signal generating means (70) and the camera video signal output from said camera portion (10);
second character combining means (37) for combining external display data generated by said character signal generating means (70) and the video signal selected by said selecting means (31); and
third character combining means (40) for combining view finder display data generated by said character signal generating means (70) and the video signal output via said second character combining means (37).

4. A character signal display according to any of Claims 1 to 3, wherein said external input determining means (50) comprises:
a comparator (OP1) for comparing the direct current level of the external video signal input to said external input terminal (3) and a reference signal level; and
switching means (Q1) for outputting the switching signal as an input detection signal to said micro-computer (60) according to the comparison result of said comparator (OP1).

## Patentansprüche

1. Zeichensignalanzeige für einen Camcorder, die in Abhängigkeit von einem Modussteuersignal entweder ein eingegebenes Kameravideosignal oder ein externes Videosignal auswählt und ein Synchronsignal verwendet, das bereits vorhanden ist und mit dem ausgewählten Signal für die Zeichenanzeige kombiniert wird, wobei die Zeichensignalanzeige weiterhin umfaßt:
einen Kamerateil (10) zum Umwandeln der optischen Information des fotografierten Objekts zu einem elektrischen Videosignal und zum Bilden eines Summenvideosignals durch das Kombinieren des Videosignals mit einem Summensynchronsignal, das jeweils durch einen Synchronsignalerzeuger des Kamerateils (10) erzeugte Horizontal- und Vertikalsynchronsignale umfaßt, wobei die Zeichensignalanzeige weiterhin gekennzeichnet ist durch:
einen Sucher (80) zum Anzeigen eines Zeichensignals durch das Erzeugen von entsprechenden Horizontal- und Vertikalsynchronsignalen und zum Bereitstellen der Synchronsignale für eine Zeichensignalerzeugungseinrichtung (70) in einem ersten Fall, wobei der Sucher (80) in einem zweiten, alternativen Fall ein Zeichensignal anzeigt, indem er das Vertikalsynchronsignal verwendet, das durch einen Synchronsignaltrenner (38) von dem externen Videosignal oder dem aus dem Kamerateil (10) ausgegebenen Summenvideosignal getrennt wurde, indem er das Horizontalsynchronsignal verwendet, das durch den Sucher (80) von dem Summenvideosignal getrennt wurde, und indem er ein durch den Sucher (80) erzeugtes Horizontalsynchronsignal verwendet,
eine Externeingabe-Bestimmungseinrichtung (50) zum Feststellen, ob ein externes Videosignal mit einem Summensynchronsignal, das ein Horizontal- und/oder Vertikalsynchronsignal umfaßt, von einem Externeingabeanschluß (3) eingegeben wird,
eine Auswahleinrichtung (31) zum Auswählen des Kameravideosignals vom Kamerateil (10) oder eines externen Videosignals von dem Externeingabeanschluß (3) in Abhängigkeit von einem Modussteuersignal und zum Auswählen des Kameravideosignals, wenn kein externes Videosignal eingegeben wird,
einen Mikrocomputer (60), um im zweiten Fall das durch die Auswahleinrichtung (31) ausgewählte Videosignal von einem Synchronsignaltrenner (38) zu empfangen, der das Vertikalsynchronsignal von dem empfangenen Summensynchronsignal trennt, wobei der Mikrocomputer (60) im ersten und im zweiten Fall ein Auswahlsteuersignal an die Auswahleinrichtung (31) ausgibt, um in Abhängigkeit von einem Modussteuersignal das Kameravideosignal oder ein externes Videosignal auszuwählen,
eine Zeichensignalerzeugungseinrichtung (70) zum Erzeugen des Zeichensignals für eine vorbestimmte Position auf der Basis der vom Mikrocomputer (60) und/oder Sucher (80) bereitgestellten Vertikal- und Horizontalsynchronsignale, und
eine Zeichensignalkombinationseinrichtung (20, 37, 40) zum Kombinieren des durch die Zeichensignalerzeugungseinrichtung (70) erzeugten Zeichensignals mit dem Kameravideosignal oder einem externen Videosignal.

2. Zeichensignalanzeige nach Anspruch 1, wobei der Sucher (80) eine Automatische-Frequenzsteuerungs-Schaltung (87) umfaßt, so daß das Horizontalsynchronsignal korrigiert werden kann, das von dem Signal getrennt wird, das auf das aus dem Kamerateil (10) ausgegebene Videosignal geladen ist.

3. Zeichensignalanzeige nach Anspruch 1 oder 2, wobei die Zeichensignalkombinationseinrichtung (20, 37, 40) umfaßt:
eine erste Zeichenkombinationseinrichtung (20) zum Kombinieren von durch die Zeichensignalerzeugungseinrichtung (70) erzeugten Aufzeichnungsdaten mit dem aus dem Kamerateil (10) ausgegebenen Kameravideosignal,
eine zweite Zeichenkombinationseinrichtung (37) zum Kombinieren von durch die Zeichensignalerzeugungseinrichtung (70) erzeugten Externanzeigedaten mit dem durch die Auswahleinrichtung (31) ausgewählten Videosignal, und
eine dritte Zeichenkombinationseinrichtung (40) zum Kombinieren von durch die Zeichensignalerzeugungseinrichtung (70) erzeugten Sucheranzeigedaten mit dem über die zweite Zeichenkombinationseinrichtung (37) ausgegebenen Videosignal.

4. Zeichensignalanzeige nach wenigstens einem der Ansprüche 1 bis 3, wobei die Externeingabe-Bestimmungseinrichtung (50) umfaßt:
einen Vergleicher (OP1) zum Vergleichen des Gleichstrompegels des am Externeingabeanschluß (3) eingegebenen externen Videosignals mit einem Bezugssignalpegel, und
eine Schalteinrichtung (Q1) zum Ausgeben des Schaltsignals als Eingabefeststellungssignal an den Mikrocomputer (60) in Übereinstimmung mit dem Vergleichsergebnis des Vergleichers (OP1).

## Revendications

1. Dispositif d'affichage de signal de caractère pour un caméscope qui sélectionne soit un signal vidéo de caméra d'entrée soit un signal vidéo extérieur en fonction d'un signal de commande de mode et qui utilise un signal de synchronisation déjà présent et combiné avec le signal sélectionné pour afficher un caractère, comprenant en outre :
une partie caméra (10) destinée à convertir les informations optiques de l'objet photographié en un signal vidéo électrique et à former un signal vidéo composite en combinant ledit signal vidéo avec un signal de synchronisation composite comprenant des signaux de synchronisation horizontale et verticale respectifs, généré par un générateur de signal de synchronisation de la partie caméra (10) ; le dispositif d'affichage de signal de caractère étant caractérisé en ce qu'il comprend :
un viseur (80) prévu pour, dans un premier cas, afficher un signal de caractère en générant des signaux de synchronisation horizontale et verticale respectifs et pour fournir les signaux de synchronisation à des moyens générateurs de signal de caractère (70), le viseur (80) étant, dans un second cas, comme autre variante possible, prévu pour afficher un signal de caractère en utilisant le signal de synchronisation verticale séparé par un séparateur de signal de synchronisation (38) du signal vidéo extérieur ou du signal vidéo composite fourni en sortie par l'intermédiaire de ladite partie caméra (10), et le signal de synchronisation horizontale séparé par le viseur (80) du signal vidéo composite ainsi qu'un signal de synchronisation horizontale généré par le viseur (80) ;
des moyens de détermination d'entrée extérieure (50) destinés à détecter si un signal vidéo extérieur contenant un signal de synchronisation composite comprenant des signaux de syncnronisation horizontale et/ou verticale respectifs est reçu en entrée à partir d'un terminal d'entrée extérieur (3) ;
des moyens de sélection (31) destinés à sélectionner ledit signal vidéo de caméra provenant de la partie caméra (10) ou un signal vidéo extérieur provenant du terminal d'entrée extérieur (3) en fonction d'un signal de commande de mode, et à sélectionner ledit signal vidéo de caméra si un signal vidéo extérieur n'est pas reçu en entrée ;
un micro-ordinateur (60) prévu pour, dans le second cas, recevoir le signal vidéo sélectionné par les moyens de sélection (31) à partir d'un séparateur de signal de synchronisation (38) qui sépare le signal de synchronisation verticale du signal de synchronisation composite reçu, et pour, dans les premier et second cas, fournir en sortie auxdits moyens de sélection (31) un signal de commande de sélection pour sélectionner ledit signal vidéo de caméra ou un signal vidéo extérieur en fonction d'un signal de commande de mode ;
des moyens générateurs de signal de caractère (70) prévus pour générer le signal de caractère destiné à être fourni à un emplacement prédéterminé, à partir des signaux de synchronisation verticale et horizontale fournis par ledit micro-ordinateur (60) et/ou ledit viseur (80) ; et
des moyens de combinaison de signal de caractère (20, 37, 40) destinés à combiner le signal de caractère généré par lesdits moyens générateurs de signal de caractère (70) avec ledit signal vidéo de caméra ou un signal vidéo extérieur.

2. Dispositif d'affichage de signal de caractère selon la revendication 1, dans lequel ledit viseur (80) comprend un circuit CAF (87) afin que le signal de synchronisation horizontale séparé du signal chargé sur le signal vidéo délivré en sortie par l'intermédiaire de ladite partie caméra (10) puisse être corrigé.

3. Dispositif d'affichage de signal de caractère selon la revendication 1 ou 2, dans lequel lesdits moyens de combinaison de signal de caractère (20, 37, 40) comprennent :
un premier moyen de combinaison de caractère (20) destiné à combiner des données d'enregistrement générées par lesdits moyens générateurs de signal de caractère (70) et le signal vidéo de caméra délivré en sortie par ladite partie caméra (10) ;
un deuxième moyen de combinaison de caractère (37) destiné à combiner des données d'affichage extérieures générées par lesdits moyens générateurs de signal de caractère (70) et le signal vidéo sélectionné par lesdits moyens de sélection (31) ; et
un troisième moyen de combinaison de caractère (40) destiné à combiner des données d'affichage de viseur générées par lesdits moyens générateurs de signal de caractère (70) et le signal vidéo délivré en sortie par l'intermédiaire dudit deuxième moyen de combinaison de caractère (37).

4. Dispositif d'affichage de signal de caractère selon l'une quelconque des revendications 1 à 3, dans lequel lesdits moyens de détermination d'entrée extérieure (50) comprennent :
un comparateur (OP1) destiné à comparer le niveau de courant continu du signal vidéo extérieur fourni en entrée audit terminal d'entrée extérieur (3) et un niveau de signal de référence ; et
des moyens de commutation (Q1) destinés à délivrer en sortie le signal de commutation comme signal de détection d'entrée audit micro-ordinateur (60) en fonction du résultat de comparaison dudit comparateur (OP1).
